Europäisches Patentamt

European Patent Office

Office européen des brevets

(11) Numéro de publication: **0 545 806 B1**

(12) **FASCICULE DE BREVET EUROPEEN**

(45) Date de publication de fascicule du brevet: **19.07.95**  (51) Int. Cl.⁶: **B60S 1/08**

(21) Numéro de dépôt: **92403235.2**

(22) Date de dépôt: **01.12.92**

(54) **Procédé et dispositif de traitement pour la détection de la pluie.**

(30) Priorité: **06.12.91 FR 9115172**

(43) Date de publication de la demande:
**09.06.93 Bulletin 93/23**

(45) Mention de la délivrance du brevet:
**19.07.95 Bulletin 95/29**

(84) Etats contractants désignés:
**DE ES GB IT**

(56) Documents cités:
**WO-A-90/00119        DE-A- 3 244 767**
**DE-A- 4 000 736       FR-A- 2 663 276**
**US-A- 4 740 735       US-A- 4 916 374**

**PATENT ABSTRACTS OF JAPAN vol. 14, no.
247 (M-978)(4190) 25 Mai 1990 & JP-A-02 068
248 (HONDA) 7 Mars 1990**

**PATENT ABSTRACTS OF JAPAN vol. 11, no.
21 (M-555)(2468) 21 Janvier 1987 & JP-A-61
193 954 (NISSAN) 28 Août 1986**

(73) Titulaire: **REGIE NATIONALE DES USINES RE-
NAULT S.A.**
**34, Ouai du Point du Jour**
**F-92109 Boulogne Billancourt (FR)**

(72) Inventeur: **Buot, Jean-Luc**
**9, rue Henri-Dunant**
**F-95130 Franconville (FR)**
Inventeur: **Warenghem, Michel**
**8, Avenue de l'Abbé Saint-Pierre**
**F-.92150 Suresnes (FR)**

(74) Mandataire: **Ernst-Schonberg, Michel et al**
**REGIE NATIONALE DES USINES RENAULT**
**Service 02 67**
**8-10, Avenue Emile Zola**
**F-92109 Boulogne-Billancourt (FR)**

EP 0 545 806 B1

## Description

La présente invention concerne un procédé pour traiter un signal électrique en provenance d'un capteur, signal dont la période varie linéairement en fonction de la quantité d'eau présente sur le capteur, et fournir un signal de décision en fonction du résultat du traitement. L'invention concerne également un dispositif électronique mettant en oeuvre ledit procédé.

Un tel dispositif associé à un capteur est notamment destiné à commander automatiquement le fonctionnement des essuie-vitres d'un véhicule automobile.

Divers dispositifs de commande ont déjà été essayés avec plus ou moins de succès, par exemple celui décrit dans le brevet US 4 317 073, mais la difficulté réside souvent dans la réalisation de la détection de la quantité d'eau, laquelle commande le choix d'un mode de fonctionnement parmi plusieurs : repos, intermittent, lent, rapide.

En effet, la détection est soumise à divers aléas tels que les parasites électriques qui faussent la mesure ou encore les grosses gouttes isolées qui ne doivent pas être confondues avec une grosse pluie. En outre, les dispositifs connus ne permettent de distinguer entre la pluie, la neige et le brouillard.

La présente invention a pour but de mettre en oeuvre un procédé de traitement des signaux électriques fournis par un capteur qui ne présente pas les inconvénients précités ainsi que de réaliser un dispositif de traitement correspondant.

Selon la présente invention, une dispositif de traitement conforme au préambule est particulièrement remarquable en ce qu'il comporte des moyens pour mesurer la durée de ladite période et pour, entre deux mesures successives de ladite durée, détecter exclusivement une augmentation de la durée puis, dans ce cas, mémoriser ladite augmentation.

Ainsi, selon cette particularité, seules les arrivées d'eau sur le capteur sont détectées puisque la période augmente lorsque la quantité d'eau présente sur le capteur augmente ; on ne considère donc que les variations exclusivement positives qui correspondent à un apport d'eau ; les parasites de mesure sont rapides et ponctuels et ne perturbent donc que la mesure en cours, alors que la chute d'une goutte d'eau fait croître la période de telle façon que la variation soit toujours visible à la mesure suivante.

A titre d'exemple, une variation positive de la période ne sera déclarée comme provenant d'une goutte d'eau et ne sera donc prise en compte que si elle subsiste à au moins 50 % de sa valeur initiale à la mesure suivante de la période.

En effet, on a observé que lorsqu'une goutte arrive sur le capteur, elle met un certain temps pour s'écraser pour ensuite se rétracter ; le temps d'écrasement d'une goutte d'eau sera donc borné par le début de l'accroissement et le début de la diminution de la période. Plus une goutte est grosse, plus la phase d'écrasement est longue ; le nombre de périodes mesurées durant cette phase est élevé et les augmentations positives de ces périodes par rapport aux mesures précédentes respectives sont d'autant plus importantes que la vitesse d'impact est rapide. Une goutte aura donc pour image la somme des variations positives des périodes mesurées durant l'intervalle de temps borné cité ci-dessus.

Par ce procédé de mesure, les gouttes d'eau peuvent être parfaitement isolées et classées par tailles. Le traitement utilisant ces informations pourra consister en un simple calcul de la quantité d'eau par seconde en éliminant certaines gouttes indésirables ou un calcul plus complexe de reconnaissance du type de pluie.

Pour isoler les gouttes indésirables, la solution consiste à attendre, pendant un intervalle de temps proportionnel à la taille de la goutte reçue, une seconde goutte de taille de même catégorie ou de catégorie plus élevée avant de la prendre en compte si cette seconde goutte est perçue pendant cet intervalle de temps, de l'ignorer dans le cas contraire.

En effet, les grosses gouttes sont généralement plus espacées dans le temps que les petites et en mettant en oeuvre le critère défini ci-dessus, une seule grosse goutte ne permettra pas de décider qu'il y a une grosse averse.

Avantageusement, la moyenne pour chaque taille de goutte est calculée sur un temps proportionnel à la taille desdites gouttes et est stockée dans une mémoire. Régulièrement, la somme des moyennes est comparée à un ou plusieurs seuils afin de piloter la mise en route des balais d'essuie-vitres et d'en réguler la vitesse.

L'invention concerne donc, en premier lieu, un procédé de traitement d'un signal électrique en provenance d'un capteur, signal dont la période varie linéairement en fonction de la quantité d'eau présente sur ledit capteur en vue d'obtenir au moins un signal de décision, caractérisé en ce qu'il comprend les opérations suivantes :

(a) mesurer la période du signal fourni par ledit capteur ;

(b) calculer la variation de la période dudit signal d'une mesure à la suivante ;

(c) additionner les variations positives de ladite période pendant un intervalle de temps correspondant au temps d'écrasement d'une goutte d'eau ;

(d) accumuler les résultats positifs successifs de l'opération (c) ;

(e) comparer le résultat accumulé par l'opération (d) à une valeur prédéterminée et,

(f) élaborer un premier signal de décision lorsque le résultat accumulé est supérieur à ladite valeur prédéterminée.

Selon l'invention, les différentes opérations qui viennent d'être décrites sont complétées par les suivantes :

(g) comparer les résultats successifs de l'opération (c) à au moins un seuil pour déterminer la taille de la goutte d'eau ;

(h) additionner par taille de goutte d'eau et pendant un intervalle de temps déterminé les résultats successifs de l'opération (c);

(i) calculer à intervalles périodiques la moyenne des résultats de l'opération (h) pour déterminer la quantité d'eau reçue par unité de temps ;

(j) comparer ladite moyenne de l'opération (i) à au moins un seuil et,

(k) élaborer au moins un deuxième signal de décision lorsque ladite moyenne de l'opération (i) est supérieure audit seuil.

L'invention concerne aussi un procédé pour détecter la présence de neige ou de brouillard et élaborer un signal de commande d'essuie-vitres. En outre, le dispositif électronique selon l'invention comprend un système de chauffage du capteur d'eau pour obtenir le séchage dudit capteur.

L'invention concerne, en deuxième lieu, un dispositif de traitement qui met en oeuvre le procédé ci-dessus de manière à fournir des signaux de commande du moteur d'entraînement des balais d'essuie-vitres en fonction du type de précipitations atmosphériques.

La présente invention sera mieux comprise avec la description non limitative d'un exemple de réalisation illustré par les dessins ci-annexés dans lesquels :

- la figure 1 représente un schéma d'un dispositif de traitement selon l'invention associé à un capteur,
- la figure 2 représente, dans le temps, l'évolution de la période au fur et à mesure de l'arrivée des gouttes,
- la figure 3 est un schéma fonctionnel d'un dispositif, intégré au microprocesseur MP de la figure 1, qui permet d'analyser les gouttes d'eau tombant sur le pare-brise et d'élaborer des signaux de commande des essuie-vitres du véhicule, et
- les figures 4a ou 4b sont deux parties d'un diagramme de fonctionnement du dispositif de traitement dans le cas où il est prévu une fonction de chauffage/séchage du capteur.

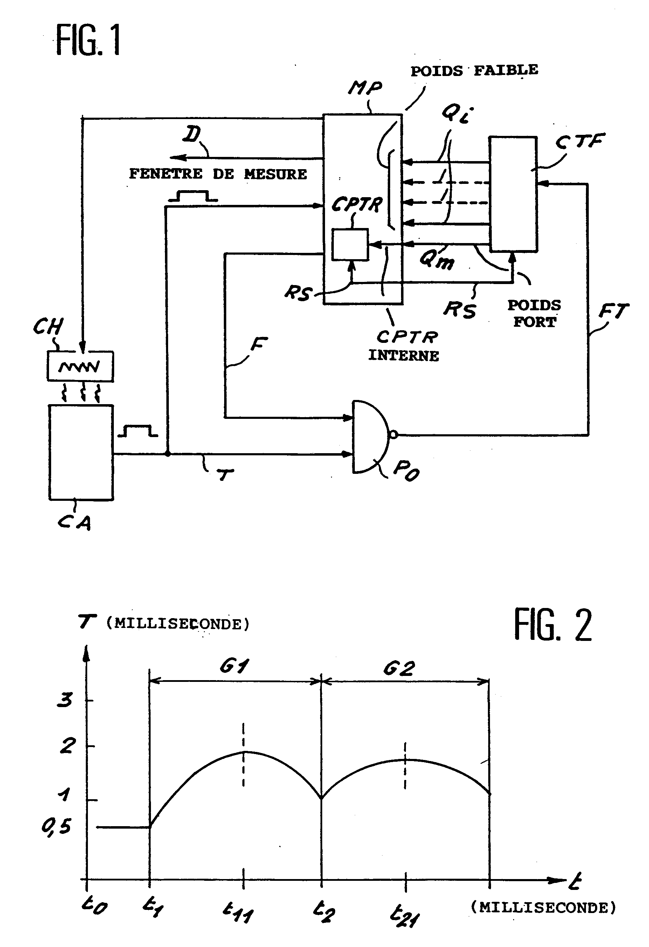

Sur la figure 1, le capteur CA émet un signal T périodique binaire dont la période est fonction de la quantité d'eau présente à chaque instant sur le capteur. Le capteur est, par exemple, celui décrit dans la demande de brevet européen publiée n° 0 333 564, notamment celui de la figure 8 qui comporte un oscillateur et un diviseur de fréquence pour fournir un signal T dont la période est proportionnelle à la quantité d'eau qui est sur le capteur. Par exemple, la fréquence est de 2 KHz quand le capteur est sec et de 340 Hz quand le capteur est saturé. Un microprocesseur MP émet un signal F, dont la fréquence est par exemple de 12 MHz, lequel est combiné avec le signal T dans une porte $P_O$ pour obtenir le signal FT qui est transmis au microprocesseur MP par l'intermédiaire d'un compteur externe de poids faibles CTF. Le signal FT est validé pendant que le signal T est à "1".

Dans l'exemple de réalisation décrit, on supposera que la période est mesurée par un nombre à 16 chiffres binaires. Le signal FT issu de la porte $P_O$, trop rapide pour être pris en compte par le microprocesseur MP, incrémente le compteur externe CTF. La sortie parallèle du compteur CTF transmet le contenu de ce dernier au microprocesseur MP par les lignes Qi à l'exception du chiffre de poids le plus fort (ligne Qm) qui incrémente directement un compteur CPTR, interne au microprocesseur MP. Le compteur CTF et le compteur CPTR, interne au microprocesseur MP, sont remis à zéro après chaque mesure de la période par un signal RS.

La figure 2 représente, en fonction du temps "t", l'évolution de la période du signal T. A la date to, le capteur est sec et la période est alors de 0,5 milliseconde (2KHz).

A la date t1 arrive une goutte G1 qui s'écrase progressivement jusqu'à la date t11 avant de se rétracter en s'évacuant jusqu'a la date t2. A la date t2 arrive une goutte G2 qui s'écrase progressivement jusqu'à la date t21 puis se rétracte....et ainsi de suite.

Pendant chaque période d'écrasement, la période du signal T augmente et ainsi ces augmentations sont prises en compte par l'unité de traitement ci-dessus décrite.

On constate que, compte-tenu des valeurs choisies et non limitatives, l'unité de traitement peut effectuer 400 mesures de période pendant une phase d'acquisition de 200 millisecondes, soit 200 mesures si l'on n'en retient qu'une sur deux ; lorsque le capteur est saturé la période T croît jusqu'à 2,9 millisecondes (340 Hz), ce qui correspond à 70 mesures pendant 200 millisecondes.

Comme cela a été exposé dans le préambule de la description, l'invention est basée sur la mesure des variations positives ou augmentations de la période du signal, ce qui correspond à la durée d'écrasement de la goutte de pluie. La période croît tant que la goutte s'écrase. La taille de la goutte est représentée par la somme des variations positives accumulées durant le temps d'écrasement de cette goutte.

A titre d'information, une goutte qui s'écrase rapidement sera représentée par une somme de variations importantes accumulées durant un temps court alors que, une même goutte qui s'écrase lentement sera représentée par une somme de petites variations (plus nombreuses) accumulées durant un temps plus long.

L'instant où la période décroît permet uniquement de stopper l'accumulation de variations positives. Le temps borné par le début et la fin de l'écrasement de la goutte est le temps d'intégration des variations positives de la période uniquement et il ne permet pas à lui seul d'évaluer la quantité d'eau reçue (quantité d'eau proportionnelle à la taille de la goutte).

$$\textbf{goutte} = K \, \Sigma \, {}^{\textbf{t11}}_{\textbf{t1}} \quad (T4 - T3)$$

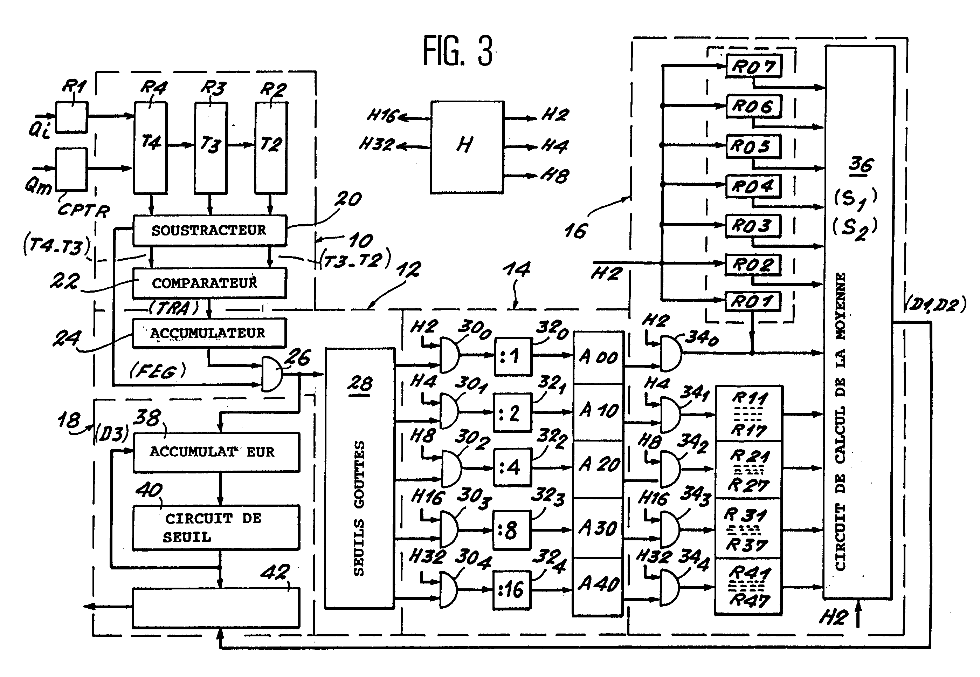

(voir figures 2 et 3)

K = constante

T4 = période (dernière mesure)

T3 = période (avant-dernière mesure)

A cet effet, le microprocesseur MP soustrait la valeur de la période précédente (T2) à cette dernière (T3). Si le résultat est positif et si à la mesure suivante de la période, la période (T4) est au moins égale à T2 + 1/2 de la variation, soit

$$T4 > T2 + \frac{T3 - T2}{2}$$

alors on en déduit que la variation détectée a bien été provoquée par un apport d'eau sur le capteur; la quantité d'eau présente sur le capteur après détection est au moins égale à la quantité d'eau initiale ajoutée de la moitié de la variation. Cette moitié peut correspondre à la valeur de la goutte écrasée après rétraction dans le cas d'une petite goutte détectée durant une seule mesure de période). Dans le cas où la condition

$$T4 > T2 + \frac{T3 - T2}{2}$$

n'est pas respectée, alors on en déduit que la variation détectée correspondait à un parasite et en conséquence, on ne tiendra pas compte du résultat de la soustraction précédente (T3 - T2).

Le coefficient fractionnaire égal à un demi est donné à titre indicatif et, il est clair qu'un autre coefficient, 1/p par exemple, peut être utilisé.

Alors la somme des variations ainsi accumulées sera l'image de la goutte d'eau qui vient de s'écraser et cette somme est comparée à différents seuils afin de déterminer la taille de cette goutte.

La figure 3 est un schéma fonctionnel d'un dispositif qui permet de ne tenir compte que des variations du signal T, d'éliminer les mesures parasites, de mesurer la taille des gouttes et de déterminer la commande D à exécuter sur le moteur de l'essuie-vitres.

Comme on l'a décrit en relation avec la figure 1, le contenu du compteur CTF (chiffres Qi et Qm) est transmis au microprocesseur MP et, plus particulièrement à un registre R1, pour les chiffres Qi de poids faibles, et à un compteur CPTR pour le chiffre Qm de poids plus fort.

Le contenu du registre R1 et du compteur CPTR est transféré à la fin de chaque mesure de la durée du signal T à un circuit 10 qui compare les mesures successives de la durée du signal T en soustrayant la précédente mesure à la nouvelle pour ne retenir que la variation positive à condition que cette variation soit par exemple, comme indiqué ci-dessus, supérieure à 50 % de la variation positive précédente. Les variations positives retenues sont transférées à un circuit 12 de mesure de la taille des gouttes puis à un circuit 14 de classement des gouttes en fonction de leur taille mesurée. Les variations positives, classées par taille, sont transférées à un circuit 16 de détermination du type de pluie. Les signaux D, définissant les différents types de pluie, sont appliqués à un circuit 18 d'élaboration des signaux de commande du moteur de l'essuie-vitres.

Le circuit 10 comprend, par exemple, trois registres en cascade R4, R3 et R2 qui enregistrent respectivement des codes T4, T3 et T2, correspondant à trois mesures successives de la durée d'un créneau du signal T, le code T2 correspondant à la mesure la plus ancienne, le code T4 correspondant à la mesure la plus récente et le code T3 correspondant à la mesure intermédiaire.

Ces trois registres R2, R3 et R4 sont connectés à un soustracteur 20 qui effectue les soustractions (T3-T2) et (T4-T3) dont les résultats positifs sont appliqués à un comparateur 22.

Si (T4-T3) > (T3-T2)/2, alors (T3-T2) est transmis à un accumulateur 24 du circuit 12 grâce à un signal de transfert TRA. Dans le cas contraire, le transfert n'a pas lieu. Il en résulte que l'accumulateur 24 additionne toutes les variations positives du signal T.

L'accumulateur 24 est connecté à un circuit de seuils 28 par l'intermédiaire d'une porte logique ET 26 dont l'ouverture est commandée par un signal FEG, dit de fin d'écrasement de goutte, fourni par le soustracteur 20 lorsqu'il détecte que la soustraction (T3-T2) et/ou (T4-T3) est négative.

Alors la somme des variations ainsi accumulées est l'image de la goutte qui vient de s'écraser et cette somme est comparée à différents seuils afin de déterminer la taille de cette goutte.

A titre d'exemple, les seuils seront les suivants :
- < 159 pour les petites gouttes (taille 0),
- ≥ 159 et < 319 pour la taille au-dessus (taille "1"),
- ≥ 319 et < 639 (taille "2"),
- ≥ 679 et < 1279 (taille "3"),
- ≥ 1279 (taille "4").

La somme sera additionnée dans un accumulateur affecté aux gouttes de sa catégorie selon le résultat de la comparaison avec les seuils de sa catégorie.

Cette fonction de classement est réalisée par le circuit 14 qui comprend un circuit de seuils 28, des circuits logiques ET $30_0$ à $30_4$, des circuits diviseurs $32_0$ à $32_4$ et des accumulateurs A00, A10, A20, A30 et A40. Le circuit de seuils 28 comporte cinq bornes de sortie, c'est-à-dire autant que de tailles de gouttes, qui sont connectées chacune à une entrée d'un des circuits ET $30_0$ à $30_4$, le circuit ET $30_0$ étant affectée à la taille "0", le circuit ET $30_1$ étant affectée à la taille "1", le circuit ET $30_2$ étant affecté à la taille "2", le circuit ET $30_3$ étant affecté à la taille "3" et le circuit $30_4$ étant affectée à la taille "4".

L'ouverture de chaque circuit ET $32_0$ à $32_4$ est commandée par un signal d'horloge respectif H2, H4, H8, H16 et H32 qui est appliqué à une deuxième borne d'entrée de chaque circuit ET. Les durées respectives des signaux H2 à H32 fournis par un circuit horloge H sont, par exemple, de 200 millisecondes, 400 millisecondes, 800 millisecondes, 1600 millisecondes, 3200 millisecondes, ceci pour tenir compte que les grosses gouttes ont une durée d'écrasement plus longue que les petites gouttes. Les bornes de sortie des circuits ET $30_0$ à $30_4$ sont connectées aux circuits diviseurs $32_0$ à $32_4$ qui divisent le code transmis, c'est-à-dire, le contenu de l'accumulateur 24, par 1, 2, 4, 8 et 16 de manière à tenir compte de la durée des signaux d'horloge H2 à H32, durée qui donne plus de "poids" aux valeurs des grosses gouttes dans le rapport des durées des signaux d'horloge. Les bornes de sortie des circuits diviseurs $32_0$ à $32_4$ sont connectées respectivement à des accumulateurs A00 à A40 dans lesquels s'additionnent les nombres correspondant à chaque taille de goutte. Ainsi, dans le cas d'une pluie fine correspondant à la taille "0", seul l'accumulateur A00 sera alimenté et son contenu augmentera de valeur. Il en résulte que le contenu de chaque accumulateur indique la taille des gouttes reçues, c'est-à-dire le type de pluie, pendant la période considérée du signal à horloge correspondant H2 à H32 mais ce contenu individuel ne permet pas de décider la mise en marche ou non des essuie-vitres.

A titre d'exemple, pendant un intervalle de temps prédéterminé de 200 millisecondes, le microprocesseur MP additionne les petites gouttes de valeur inférieure à 159 (taille "0") dans un premier accumulateur A00.

Durant un intervalle de temps de 400 millisecondes, le microprocesseur MP additionne les gouttes de valeur supérieure ou égale à 159 et inférieure à 319 (taille "1") dans un deuxième accumulateur A10 après avoir divisé la valeur des gouttes par 2. Durant un intervalle de temps de 800 millisecondes, le microprocesseur MP additionne les gouttes de valeur supérieure ou égale à 319 et inférieure à 639 (taille "2") dans un troisième accumulateur A20 après avoir divisé la valeur des gouttes par 4. Durant un intervalle de temps de 1,6 seconde, le microprocesseur MP additionne les gouttes de valeur supérieure ou égale à 639 et inférieure à 1279 (taille "3") dans un quatrième accumulateur A30 après avoir divisé la valeur des gouttes par 8. Durant un intervalle de temps de 3,2 secondes, le microprocesseur MP additionne les gouttes de valeur supérieure ou égale à 1279 (taille "4") dans un cinquième accumulateur A40 après avoir divisé la valeur des gouttes par seize.

Il en résulte que le contenu de chaque accumulateur A00, A10, A20, A30 et A40 indique la taille des gouttes reçues, c'est-à-dire le type de pluie, pendant la période considérée du signal d'horloge correspondent H2 à H32 mais ce contenu individuel ne permet de décider la mise en marche ou l'arrêt des essuie-vitres car, pour une telle décision, il faut tenir compte de la quantité d'eau total reçue pendant une durée déterminée.

Cette fonction est réalisée par les circuits 16 et 18.

Le circuit 16 comprend essentiellement des registres, notés R affecté d'un nombre, de circuits logiques ET $34_0$, $34_1$, $34_2$, $34_3$ et $34_4$ et d'un circuit de seuils 36.

L'accumulateur A00 est connecté par l'intermédiaire du circuit logique ET $34_0$, d'une part, au circuit de seuils 36 et d'autre part, à une premier registre R01 d'une série de sept registres R01 à R07. Les sept registres R01 à R07 sont connectés entre eux de manière que les bornes de sortie de l'un soient connectées aux bornes d'entrée du suivant et au circuit de seuils 36, ce qui permet de transférer le contenu d'un registre au suivant et au circuit de seuils 36 sous la commande du signal d'horloge H2, ce signal étant appliqué au circuit ET $34_0$ pour son ouverture et aux différents registres. Les accumulateurs A10 à A40 sont connectés respectivement au premier registre des séries de registres R11 à R17, R21 à R27, R31 à R37, R41 à R47 par les circuits logiques ET $34_0$ à $34_4$ qui sont commandés respectivement par les signaux d'horloge H4 à H32. Les signaux d'horloge servent aussi à transférer le contenu d'un registre d'une série au suivant et au circuit de seuils 36 selon les connexions décrites ci-dessus pour l'accumulateur A00, les registres R01 à R07 et le circuit de seuils 36.

A la fin de chaque période de 200 millisecondes, le registre R07 perd sa valeur et reçoit celle contenue dans le registre R06 ; de même, ce dernier R06 reçoit la valeur contenue dans le registre R05 et ainsi de suite pour les autres registres jusqu'au registre R01 qui perd sa valeur et reçoit les valeurs des gouttes qui seront perçues durant l'intervalle de temps suivant de 200 millisecondes.

Pour chacune des classes de gouttes plus grosses, le traitement est le même en utilisant pour chaque classe sept registres, soit les registres R11 à R17 pour les gouttes de la classe $\geq 159$ et $<319$, sept registres R21 à R27 pour les gouttes de la classe $\geq 319$ et $<639$, sept registres R31 à R37 pour les gouttes de la classe $\geq 639$ et $<1279$ et enfin, sept registres R41 à R47 pour les gouttes de la classe $\geq 1279$, soit au total 35 registres.

Le circuit 36 calcule, à chaque signal d'horloge H2, la moyenne des valeurs des 35 registres et des 5 accumulateurs A00 à A40, et compare le résultat à des seuils prédéterminés, chaque seuil correspondant à une quantité totale d'eau reçue par unité de temps. Ainsi, par exemple, un premier seuil $S_1$ correspondra à une pluie faible qui ne nécessite qu'un balayage lent de l'essuie-vitres (signal $D_1$) tandis qu'un deuxième seuil $S_2$ correspondra à une forte pluie qui nécessite un balayage rapide de l'essuie-vitres (signal $D_2$).

Ces séries de sept registres ont pour but de mémoriser les quantités d'eau reçues selon chaque classe de goutte pendant une durée de 1,6 seconde par la taille "0", pendant une durée de 3,2 secondes pour la taille "1", pendant une durée de 6,4 secondes par la taille "2", pendant une durée de 12,8 secondes pour la taille "3" et pendant une durée de 25,6 secondes pour la taille "4".

En fonctionnement continu, cela signifie que la moyenne qui est calculée toutes les 200 millisecondes correspond à la quantité d'eau reçue pendant les 25,6 secondes qui précèdent le calcul. Il en résulte que pendant cette durée de 25,6 secondes, l'arrivée d'une seule grosse goutte de pluie ne modifie pas sensiblement la moyenne car elle ne concerne qu'une seule valeur parmi 40.

Parallèlement au traitement expliqué ci-dessus, le microprocesseur MP additionne toutes les gouttes dans un accumulateur, appelé somme-gouttes, qui emmagasine les valeurs des gouttes dans les mêmes proportions que l'eau reçue par le pare-brise.

Sur le schéma de la figure 3, ceci est obtenu grâce à l'accumulateur 38 dans lequel est transféré le contenu de l'accumulateur 24 par l'intermédiaire du circuit logique ET 26. Le contenu de cet accumulateur 38 est comparé à un seuil prédéterminé $S_3$ dans un circuit 40.

Ce circuit 40 fournit un signal $D_3$ lorsque ce seuil $S_3$ est atteint et ce signal $D_3$ est appliqué, d'une part, à l'accumulateur 24 pour le remettre à zéro et, d'autre part, à un circuit logique 42 où il est combiné avec les signaux $D_1$ et $D_2$ fournis par le circuit 36. Le signal $D_3$ peut, par exemple, commander le moteur de l'essuie-vitres pour effectuer un seul coup de balayage si les signaux $D_1$ et $D_2$, ne sont pas présents. Le circuit logique 42 élabore les signaux de commande du moteur de l'essuie-vitres, c'est-à-dire arrêt, marche vitesse lente, marche vitesse rapide, balayage de durée déterminée.

La description qui vient d'être faite en relation avec les figures 1 à 3 concerne une unité de traitement des signaux électriques de période variable provenant d'un capteur de pluie en vue de déterminer la taille des gouttes et la quantité d'eau reçue par unité de temps en éliminant l'effet des parasites et de fournir ensuite des signaux de commande du moteur de l'essuie-vitres.

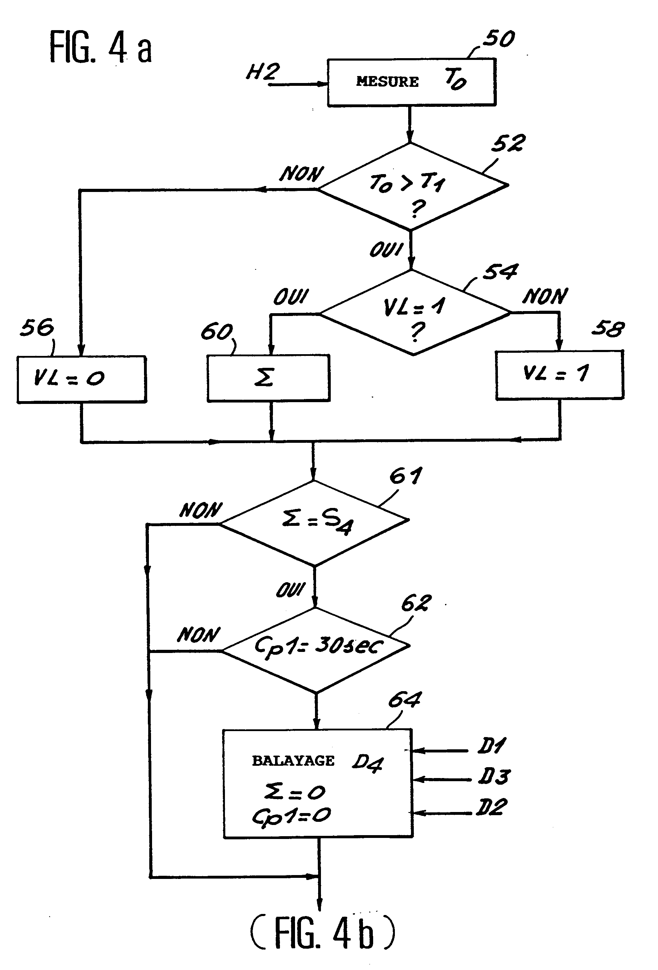

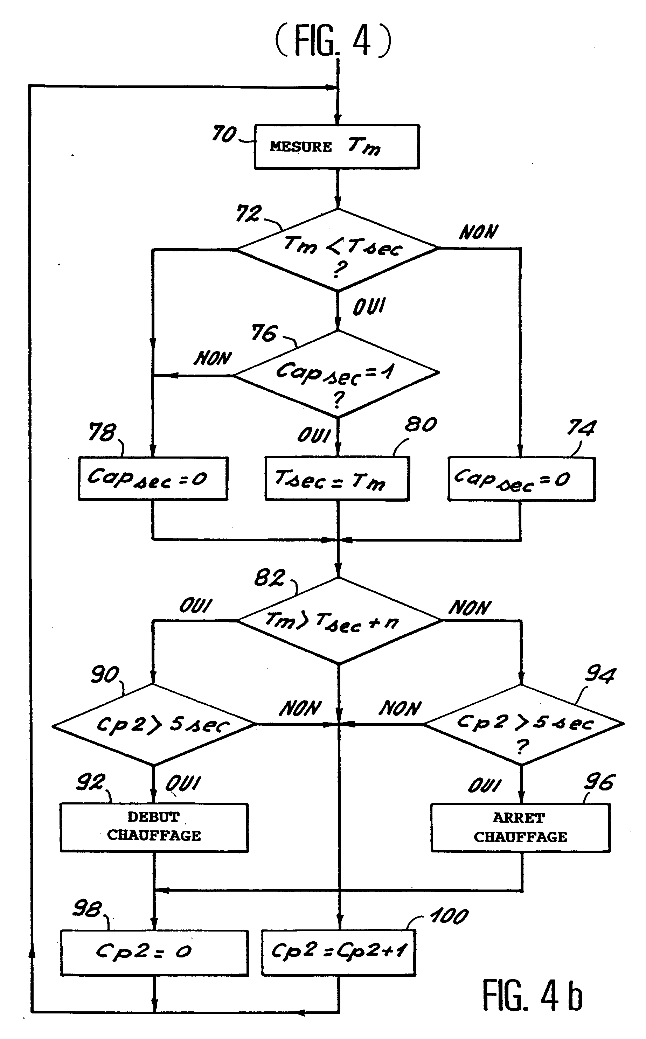

L'invention concerne également une unité de traitement qui est capable de distinguer entre les différents types de précipitation : pluie, neige, brouillard. Cette deuxième partie de l'invention sera décrite en relation avec les figures 4a et 4b qui sont des diagrammes d'opérations ou d'étapes successives à réaliser par le microprocesseur MP.

Dans le cas d'une pluie franche, c'est-à-dire tombant avec une certaine vitesse, l'unité de traitement qui a été décrite en relation avec les figures 1, 2 et 3 est satisfaisante pour obtenir le résultat recherché, savoir l'obtention d'un pare-brise duquel l'eau est évacuée par un balayage approprié de l'essuie-vitres.

Dans le cas de neige ou de brouillard, les flocons de neige ou les gouttes en suspension du brouillard ne s'écrasent pas sur le capteur et l'unité de traitement ne fonctionne plus correctement car les seuils $D_1$, $D_2$ ou $D_3$ ne sont pas atteints ou ne le sont qu'après un laps de temps trop long. Aussi, pour pallier ce mauvais fonctionnement, l'invention propose, d'une part, d'effectuer un balayage temporisé de l'essuie-vitres dans le cas d'une variation lente positive de la période du signal électrique du capteur et, d'autre part, en combinaison, de chauffer temporairement le capteur jusqu'à ce qu'il soit sec de manière à faire disparaître du capteur les flocons de neige et les gouttelettes de brouillard, ce qui le met dans le même état que le pare-brise après le premier balayage temporisé.

Sur la figure 1, cet aspect du chauffage du capteur a été symbolisé par un radiateur CH qui est disposé à proximité du capteur CA et qui est commandé par le microprocesseur MP.

Le premier diagramme de la figure 4a correspond au balayage temporisé tandis que le deuxième diagramme de la figure 4b correspond au chauffage temporisé du capteur, ce deuxième diagramme étant la suite du premier.

Pour ne pas confondre avec les références T2, T3, T4 désignant les valeurs des périodes successives du signal T sur la figure 3, on utilisera dans les figures 4a et 4b, les références $T_0$ et $T_1$, pour désigner respectivement la mesure $T_0$ de la période qui vient d'être effectuée et la mesure précédente $T_1$, ces mesures étant symbolisées par le rectangle 50. La période $T_0$ est comparée à la période précédente $T_1$ (losange 52). Si $T_0$ est inférieure à $T_1$, alors le "drapeau" variation lente VL est mis à l'état "0" (rectangle 56) et on ne prend pas en compte la différence $(T_0 - T_1)$ qui est négative.

Dans le cas contraire, si $T_0$ est supérieure à $T_1$ de quelques unités, par exemple 4 unités, et si lors de la précédente mesure ayant donné $T_1$, le drapeau variation lente VL a été mis en l'état "1", alors la différence $(T_0 - T_1)$ est transférée dans un accumulateur (rectangle 60). Par contre, si VL était l'état "0", il est mis à l'état "1" (rectangle 58) pour servir lors de la mesure suivante.

A intervalles de temps périodiques, par exemple, toutes les cinq secondes, le contenu de l'accumulateur 60 est comparé à un seuil $S_4$ (losange 60). Si la somme $\Sigma$ est supérieure à $S_4$ et s'il s'est écoulé, par exemple, plus de trente secondes mesuré par un compteur $C_{p1}$ depuis le dernier balayage (losange 62), alors un signal de balayage temporisé $D_4$ est appliqué au moteur de l'essuie-vitres tandis que l'accumulateur 60 et le compteur $C_{p1}$ du délai de trente secondes sont remis à zéro. Cette remise à zéro a également lieu si l'unité de traitement fournit les signaux $D_1$ ou $D_2$. Si la somme $\Sigma$ est inférieure au seuil $S_4$ ou si le délai de 30 secondes depuis le dernier balayage temporisé n'est pas terminé, aucun balayage, ni aucune remise à zéro n'est effectué.

La variation lente dont il a été question ci-dessus ne peut être détectée que dans la mesure où le capteur part d'un état sec, état qui correspond à une période déterminée variant d'un capteur à l'autre par suite de la disparition de la fabrication. Aussi, l'invention prévoit, d'une part, de déterminer la période $T_{sec}$ correspondant à l'état sec du capteur et, d'autre part, de chauffer le capteur si la période mesurée $T_m$ est supérieure à $T_{sec}$ ou d'arrêter le chauffage du capteur si $T_m$ est inférieure à $T_{sec}$.

Pour mesurer la période $T_{sec}$, il faut partir d'une valeur initiale $T_i$ qui peut être la même pour tous les capteurs d'une même série de fabrication. A la mise en route du véhicule, le chauffage du capteur est mis en marche et la période $T_{sec}$ est initialisée à la valeur $T_i$.

La période $T_m$ du signal T est mesurée toutes les 200 millisecondes (rectangle 70) et est comparée à $T_i$ (losange 72). Si $T_m$ est supérieure à $T_i$, cela signifie que le capteur n'est pas sec, ce que l'on indique en mettant un drapeau $Cap_{sec}$ à l'état "0" (rectangle 74).

Si $T_m$ est inférieure à $T_i$, cela signifie que la période $T_i$, c'est-à-dire si $Cap_{sec}$ est à l'état "1" (losange 76).

S'agissant de la première mesure $T_m$ qui est inférieure à $T_i$, le drapeau $Cap_{sec}$ qui est à l'état "0" sera mis à l'état "1" (rectangle 78). Si la mesure suivante $T_m$ est également inférieure à $T_i$, alors la valeur $T_m$ remplace la valeur $T_i$ (rectangle 80) et s'appellera $T_{sec}$.

Si la mesure suivante $T_m$ est inférieure à $T_{sec}$, alors elle remplacera $T_{sec}$ et ainsi de suite jusqu'à ce que $T_m$ devienne supérieure à $T_{sec}$, auquel cas le drapeau $Cap_{sec}$ est mis à l'état "0" (rectangle 74).

Ayant déterminé la période $T_{sec}$ correspondant au capteur sec, il est possible de commander le chauffage du capteur pour qu'il soit sec, l'état sec correspondant à la période $T_{sec}$ qui est constamment mise à jour par les opérations définies ci-dessus.

La commande du chauffage du capteur est obtenue de la manière suivante. La période mesurée $T_m$ est comparée (losange 82) à une valeur supérieure à $T_{sec}$ de quelques unités référencées (nombre entier n). Si $T_m$ est inférieure à $T_{sec}$, cela signifie que le capteur est sec et qu'il faut arrêter le chauffage (rectangle 36).

Cependant, cet arrêt n'est réellement effectué qu'un certain intervalle de temps (cinq secondes par exemple) mesuré par un compteur $C_{p2}$ après le dépassement vers le bas du seuil $T_{sec}$ (losange 94).

Si $T_m$ est supérieure à $T_{sec}$, cela signifie que le capteur est humide et qu'il faut mettre en marche le chauffage. Cependant, cette mise en marche n'est réellement effectuée qu'un certain intervalle de temps (cinq secondes par exemple), également mesuré par le compteur $C_{p2}$, après le dépassement vers le haut du seuil $T_{sec}$ (losange 90).

Cet intervalle de temps de cinq secondes à la mise en marche ou à l'arrêt du chauffage est obtenu par le compteur $C_{p2}$ (rectangles 98 et 100) qui est mis à l'état "0" l'état "0" par le début du chauffage ou par l'arrêt du chauffage et qui incrémente d'une unité à chaque boucle de ce compteur (98, 100) que l'on vérifie lors des opérations des losanges 90 et 94. Comme indiqué ci-dessus, ce compteur (98, 100) est également à l'état "zéro" à la mise sous tension du véhicule.

## Revendications

**1.** Procédé de traitement d'un signal électrique en provenance d'un capteur (CA), signal dont la période (T) varie linéairement en fonction de la quantité d'eau présente sur ledit capteur (CA) en vue d'obtenir au moins un signal de décision (D), caractérisé en ce qu'il comprend les opérations suivantes :

(a) mesurer la période (T2, T3, T4) du signal fourni par ledit capteur (CA) ;

(b) calculer la variation (T3 - T2), (T4 - T3) de la période (T2, T3, T4) dudit signal d'une mesure à la suivante ;

(c) additionner les variations positives de ladite période (T2, T3, T4) pendant un intervalle de temps correspondant au temps d'écrasement d'une goutte d'eau ;

(d) accumuler (38) les résultats positifs successifs de l'opération (c) ;

(e) comparer (40) le résultat accumulé par l'opération (d) à une valeur prédéterminée ($S_3$) et,

(f) élaborer (40) un premier signal de décision $D_3$ lorsque le résultat accumulé est supérieur à ladite valeur prédéterminée ($S_3$) ;

**2.** Procédé selon la revendication 1, caractérisé en ce que ledit signal de décision ($D_3$) est un signal de durée temporisée.

**3.** Procédé selon la revendication 1 ou 2, caractérisé en ce que, dans l'opération (c), la variation positive (T3 - T2) n'est prise en compte que si, à la mesure suivante (T4) de la période, celle-ci (T4) est au moins égale à

$$\left(T2 + \frac{T3 - \bar{T}2}{p}\right).$$

**4.** Procédé selon la revendication 3, caractérisé en ce que la fraction 1/p est égale à un demi.

**5.** Procédé selon l'une quelconque des revendications précédentes 1 à 4, caractérisé en ce que dans l'opération (c), le temps d'écrasement de la goutte d'eau est déterminée par le temps pendant lequel les variations de la période (T2, T3, T4) restent positives.

**6.** Procédé selon l'une quelconque des revendications précédentes 1 à 5, caractérisé en ce qu'il comprend, en outre, les opérations suivantes :

(g) comparer les résultats successifs de l'opération (c) à au moins un seuil pour déterminer la taille de la goutte d'eau ;

(h) additionner par taille de goutte d'eau et pendant un intervalle de temps déterminé les résultats successifs de l'opération (c);

(i) calculer à intervalles périodiques la moyenne des résultats de l'opération (h) pour déterminer la quantité d'eau reçue par unité de temps ;

(j) comparer ladite moyenne de l'opération (i) à au moins un seuil ($S_1$, $S_2$) et,

(k) élaborer au moins un deuxième signal de décision ($D_1$, $D_2$) lorsque ladite moyenne de l'opération (i) est supérieure audit seuil ($S_1$, $S_2$).

**7.** Procédé selon la revendication 6, caractérisé en ce que, dans l'opération (h), l'intervalle de temps déterminé pour l'addition des résultats successifs de l'opération (c) est proportionnel à la taille de la goutte d'eau considérée (H2, H4, H8, H16, H32).

**8.** Procédé selon la revendication 6 ou 7, caractérisé en ce que le premier signal de décision ($D_3$) et le second signal de décision ($D_1$, $D_2$) sont combinés dans un circuit logique (42) de manière à ne rendre actif le premier signal que si le deuxième signal est absent.

**9.** Procédé selon l'une quelconque des revendications précédentes 1 à 8, caractérisé en ce qu'il comprend, en outre, les opérations suivantes :

(m) additionner (54, 56, 58, 60) les variations positives obtenues par l'opération (b) si elles sont supérieures à une valeur prédéterminée ;

(n) comparer (61) à intervalles périodiques le résultat ($\Sigma$) des additions successives à un seuil ($S_4$) et fournir un signal si ledit seuil ($S_4$) est dépassé, et

(o) élaborer (60, 62, 64) un signal de balayage temporisé ($D_4$) si ledit seuil de l'opération (n) est dépassé et si le dernier signal de balayage temporisé a eu lieu un intervalle de temps prédéterminé.

**10.** Procédé selon l'une quelconque des revendications précédentes 1 à 9, caractérisé en ce qu'il comprend, en outre, les opérations suivantes :

(p) comparer la période mesurée ($T_m$) par l'opération (a) à la période ($T_{sec}$) correspondant au capteur sec, et,

(q) remplacer la période ($T_{sec}$) correspondant au capteur sec par la période mesurée ($T_m$) si la période ($T_{sec}$) est inférieure à la période ($T_{sec}$).

11. Procédé selon la revendication 10, caractérisé en ce que, au démarrage du procédé, la période ($T_{sec}$), correspondant au capteur sec est initialisée à une valeur initiale ($T_i$).

12. Procédé selon la revendication 10 ou 11, caractérisé en ce qu'il comprend, en outre, les opérations suivantes :

(r) comparer la période ($T_m$) mesurée par l'opération (a) à la période ($T_{sec}$) correspondant au capteur sec et déterminée, par les opérations (p) et (q) mais augmentée d'un nombre prédéterminé n ;

(s) élaborer un signal d'arrêt dudit système de chauffage (CH) du capteur (CA) si la période mesurée ($T_m$) est inférieure à la période ($T_{sec}$) correspondant au capteur sec et augmentée de n unités ;

13. Procédé selon la revendication 12, caractérisé en ce que la mise en marche dudit système de chauffage (CH) n'est autorisée que si la période mesurée ($T_m$) est supérieure de n unités à la période ($T_{sec}$) correspondant au capteur sec et ceci pendant un intervalle de temps prédéterminé.

14. Procédé selon la revendication 12 et 13, caractérisé en ce que l'arrêt dudit système de chauffage (CH) n'est autorisée que si la période mesurée ($T_m$) est inférieure à la période ($T_{sec}$) correspondant au capteur sec et augmentée de n unités.

15. Dispositif électronique pour traiter un signal électrique (T) en provenance d'un capteur (CA), signal dont la période varie linéairement en fonction de la quantité d'eau présente sur le capteur (CA), et fournir un signal de décision (D) à positionner en fonction du résultat du traitement, caractérisé en ce qu'il comporte des'moyens ($P_O$, CTF, MP) pour mesurer la durée de ladite période et pour, entre deux mesures successives de ladite durée, détecter (20, 22) exclusivement une augmentation de la durée puis, dans ce cas, mémoriser ladite augmentation dans un premier accumulateur (24) où elle est additionnée aux précédentes augmentations correspondant à la même goutte de pluie.

16. Dispositif selon la revendication 15, caractérisé en ce que ladite augmentation de la durée (T) de la période est comparée dans un comparateur (22) à l'augmentation mesurée précédemment de manière à ne la prendre en compte que si elle est supérieure à une fraction de l'augmentation mesurée précédemment.

17. Dispositif selon la revendication 15 ou 16, caractérisé en ce qu'il comprend un deuxième comparateur (28) dans lequel le contenu du premier accumulateur (24) correspondant à une goutte de pluie est comparé à au moins une valeur prédéterminée correspondant à une taille déterminée, ledit contenu du premier accumulateur (24) étant ensuite mémorisé dans un deuxième ou troisième accumulateur (A00, A10, A20, A30 et A40) selon que ledit contenu est inférieur ou supérieur à ladite valeur prédéterminée, lesdits deuxième et troisième accumulateurs correspondant ainsi chacun à une taille de goutte.

18. Dispositif selon la revendication 17, caractérisé en ce qu'il comprend des moyens ($30_0$ à $30_4$, $32_0$ à $32_4$) pour additionner dans lesdits deuxième et troisième accumulateurs, pendant un intervalle de temps proportionnel à la taille, les contenus successifs du premier accumulateur (24).

19. Dispositif selon la revendication 18, caractérisé en ce qu'il comprend, en outre, des moyens (16) pour calculer par unité de temps la moyenne des contenus des deuxième et troisième accumulateurs et comparer ladite moyenne à au moins un seuil afin d'élaborer au moins un signal ($D_1$, $D_2$) de commande d'un essuie-vitres.

20. Dispositif selon la revendication 15 ou 16, caractérisé en ce qu'il comprend, en outre, un quatrième accumulateur (38) et un quatrième comparateur (40) pour comparer le contenu du quatrième comparateur (38) à un seuil afin d'élaborer un signal ($D_3$) de commande temporisée d'un essuie-vitres lorsque ledit contenu est supérieur à une valeur prédéterminée.

**Claims**

1. A method of processing an electrical signal from a sensor (CA), the period (T) of this signal varying in a linear manner as a function of the quantity of water present on the sensor (CA) in order to obtain at least one decision signal (D), characterised in that it comprises the following operations:

(a) measuring the period (T2, T3, T4) of the signal supplied by the sensor (CA);

(b) calculating the variation (T3 - T2), (T4 - T3) of the period (T2, T3, T4) of the signal from one measurement to the next;

(c) adding the positive variations of this period (T2, T3, T4) during a time interval corresponding to the break-up time of a droplet of water;

(d) accumulating (38) the successive positive results of operation (c);

(e) comparing (40) the results accumulated by operation (d) to a predetermined value (S3) and,

(f) processing (40) a first decision signal (D3) when the accumulated result is greater than this predetermined value (S3).

2. A method as claimed in claim 1, characterised in that the decision signal (D3) is a signal of timed duration.

3. A method as claimed in claims 1 or 2, characterised in that in operation (c) the deposited variation (T3 - T2) is taken into account only if, at the following measurement (T4) of the period, this measurement (T4) is at least equivalent to (T2 + (T3 - T2)/p).

4. A method as claimed in claim 3, characterised in that the fraction 1/p is equal to one half.

5. A method as claimed in any one of claims 1 to 4, characterised in that in operation (c), the break-up time of the droplet of water is determined by the time during which the variations of the period (T2, T3, T4) remain positive.

6. A method as claimed in any one of claims 1 to 5, characterised in that it further comprises the following operations:

(g) comparing the successive results of operation (c) to at least one threshold in order to determine the size of the droplet of water;

(h) adding, by size of water droplet and for a predetermined time interval, the successive results of operation (c);

(i) calculating at periodic intervals the mean of the results of operation (h) in order to determine the quantity of water received per unit of time;

(j) comparing this mean from operation (i) to at least one threshold (S1, S2);

(k) processing at least a second decision signal (D1, D2) when this mean from operation (i) is greater than the threshold (S1, S2).

7. A method as claimed in claim 6, characterised in that in operation (h), the time interval determined for the addition of the successive results of operation (c) is proportional to the size of the droplet of water in question (H2, H4, H8, H16, H32).

8. A method as claimed in claim 6 or 7, characterised in that the first decision signal (D3) and the second decision signal (D1, D2) are combined in a logic circuit (42) in order to activate the first signal only if the second signal is absent.

9. A method as claimed in any one of claims 1 to 8, characterised in that it further comprises the following operations:

(m) adding (54, 56, 58, 60) the positive variations obtained by operation (b) if they are greater than a predetermined value;

(n) comparing (61), at periodic intervals, the result ($\Sigma$) of the successive additions to a threshold (S4) and supplying a signal if this threshold (S4) is exceeded;

(o) processing (60, 62, 64) a timed scanning signal (D4) if the threshold of operation (n) is exceeded and if the last timed scanning signal has taken place at a predetermined time interval.

10. A method as claimed in any one of claims 1 to 9, characterised in that it further comprises the following operations:

(p) comparing the period measured (Tm) by operation (a) to the period (Tsec) corresponding to the dry sensor;

(q) replacing the period (Tsec) corresponding to the dry sensor by the period measured (Tm) if the period (Tsec) is lower than the period (Tsec).

11. A method as claimed in claim 10, characterised in that, at the start of the method, the period (Tsec) corresponding to the dry sensor is initialised to an initial value (Ti).

12. A method as claimed in claim 10 or 11, characterised in that it further comprises the following operations:

(r) comparing the period (Tm) measured by operation (a) to the period (Tsec) corresponding to the dry sensor and determined by operations (p) and (q) but increased by a predetermined number n;

(s) processing a stop signal for the heating system (CH) of the sensor (CA) if the period measured (Tm) is lower than the period (Tsec) corresponding to the dry sensor and increased by n units.

**13.** A method as claimed in claim 12, characterised in that the ignition of the heating system (CH) is authorised only if the period measured (Tm) is greater by n units than the period (Tsec) corresponding to the dry sensor for a predetermined time interval.

**14.** A method as claimed in claims 12 and 13, characterised in that the shutdown of the heating system (CH) is authorised only if the period measured (Tm) is lower than the period (Tsec) corresponding to the dry sensor and increased by N units.

**15.** An electronic device for processing an electrical signal (T) from a sensor (CA), the period of which signal varies in a linear manner as a function of the quantity of water present on the sensor (CA), and supplying a decision signal (D) to be positioned as a function of the result of the processing, characterised in that it comprises means (Po, CTF, MP) for measuring the duration of this period and, between two successive measurements of this duration, exclusively to detect (20, 22) an increase in the duration and then, in this case, to store this increase in a first accumulator (24) in which it is added to the previous increases corresponding to the same droplet of rain.

**16.** A device as claimed in claim 15, characterised in that the increase in the duration (T) of the period is compared in a comparator (22) to the previously measured increase in order to take it into account only if it is greater than a fraction of the increase previously measured.

**17.** A device as claimed in claim 15 or 16, characterised in that it comprises a second comparator (28) in which the content of the first accumulator (24) corresponding to a droplet of rain is compared with at least one predetermined value corresponding to a predetermined size, this content of the first accumulator (24) then being stored in a second or third accumulator (A00, A10, A20, A30 and A40) depending on whether the content is higher or lower than this predetermined value, the second and third accumulators therefore each corresponding to a droplet size.

**18.** A device as claimed in claim 17, characterised in that it comprises means (300 to 304, 320 to 324) for adding in the second and third accumulators, for a time interval proportional to size, the successive contents of the first accumulator (24).

**19.** A device as claimed in claim 18, characterised in that it further comprises means (16) for calculating, by unit of time, the mean of the contents of the second and third accumulators and comparing this mean with at least one threshold in order to process at least one signal (D1, D2) for the control of windscreen wipers.

**20.** A device as claimed in claim 15 or 16, characterised in that it further comprises a forth accumulator (38) and a fourth comparator (40) for comparing the content of the fourth comparator (38) with a threshold in order to process a signal (D3) for the timed control of windscreen wipers when this content is greater than a predetermined value.

**Patentansprüche**

**1.** Verfahren zur Verarbeitung eines von einem Fühler (CA) stammenden elektrischen Signals, dessen Periode (T) linear als Funktion der auf dem Fühler (CA) anwesenden Wassermenge variiert, im Hinblick auf den Erhalt wenigstens eines Entscheidungssignals (D), dadurch gekennzeichnet, daß es die folgenden Schritte aufweist:

(a) Messen der Periode (T2, T3, T4) des vom Fühler (CA) stammenden Signals,

(b) Berechnen der Variation (T3 - T2), (T4 - T3) der Periode (T2, T3, T4) des Signals zwischen zwei aufeinanderfolgenden Messungen,

(c) Addieren der positiven Veränderungen der Periode (T2, T3, T4) während eines Zeitintervalls entsprechend der Ausbreitungszeit eines Wassertropfens,

(d) Akkumulieren (38) der positiven aufeinanderfolgenden Messungen des Schrittes (c),

(e) Vergleichen (40) des akkumulierten Resultats des Schrittes (d) mit einem vorgegebenen Wert (S3) und

(f) Erstellen (40) eines ersten Entscheidungssignals (D3), wenn das akkumulierte Resultat größer ist als der vorgegebene Wert (S3).

**2.** Verfahren nach Anspruch 1, dadurch gekennzeichnet, daß das Entscheidungssignal (D3) ein Signal mit zeitlich beschränkter Dauer ist.

**3.** Verfahren nach Anspruch 1 oder 2, dadurch gekennzeichnet, daß während des Schrittes (c) die positive Veränderung (T3-T2) nur berücksichtigt wird, wenn bei der nachfolgenden Messung (T4) der Periode diese wenigstens gleich

$$(T2 + \frac{T3 - T2}{p}$$

ist.

4. Verfahren nach Anspruch 3, dadurch gekennzeichnet, daß der Bruchteil 1/p gleich 1/2 ist.

5. Verfahren nach einem der vorhergehenden Ansprüche 1 bis 4, dadurch gekennzeichnet, daß während des Schrittes (c) die Ausbreitungszeit des Wassertropfens durch die Zeit bestimmt wird, während der die Veränderungen der Periode (T2, T3, T4) positiv sind.

6. Verfahren nach einem der vorhergehenden Ansprüche 1 bis 5, dadurch gekennzeichnet, daß es außerdem die folgenden Schritte aufweist:
    (g) Vergleichen der aufeinanderfolgenden Resultate des Schrittes (c) mit wenigstens einer Schwelle, um die Größe des Wassertropfens zu bestimmen,
    (h) Addieren nach Größe der Wassertropfen und, während eines vorgegebenen Zeitintervalls, die aufeinanderfolgenden Resultate des Schrittes (c),
    (i) Berechnen in periodischen Intervallen den Mittelwert der Resultate des Schrittes (h) zur Bestimmung der pro Zeiteinheit auftreffenden Wassermenge,
    (j) Vergleichen des Mittelwertes des Schrittes (i) mit wenigstens einer Schwelle (S1, S2) und
    (k) Erstellen wenigstens eines zweiten Entscheidungssignals (D1, D2), wenn der Mittelwert des Schrittes (i) größer als die Schwelle (S1, S2) ist.

7. Verfahren nach Anspruch 6, dadurch gekennzeichnet, daß während des Schrittes (h) das bestimmte Zeitintervall zum Addieren der aufeinanderfolgenden Resultate des Schrittes (c) proportional ist zur Größe der in Betracht kommenden Wassertropfen (H2, H4, H8, H16, H32).

8. Verfahren nach Anspruch 6 oder 7, dadurch gekennzeichnet, daß das erste Entscheidungssignal (D3) und das zweite Entscheidungssignal (D1, D2) in einem logischen Schaltkreis (42) derart miteinander kombiniert werden, daß das erste Signal nur wirksam wird, wenn das zweite Signal fehlt.

9. Verfahren nach einem der vorhergehenden Ansprüche 1 bis 8, dadurch gekennzeichnet, daß es außerdem die folgenden Schritte aufweist:
    (m) Addieren (54, 56, 58, 60) der durch den Schritt (b) erhaltenen positiven Veränderungen, wenn diese größer sind als ein vorgegebener Wert,
    (n) Vergleichen (61) in periodischen Zeitintervallen das Resultat (Σ) der aufeinanderfolgenden Additionen mit einer Schwelle (S4) und Abgeben eines Signals, wenn die Schwelle (S4) überschritten wird und
    (o) Erstellen (60, 62, 64) eines Signals (D4) für einen zeitlich beschränkten Wischvorgang, wenn die Schwelle des Schrittes (n) überschritten wird und wenn das letzte Signal für den zeitlich beschränkten Wischvorgang vor einem vorgegebenen Zeitintervall stattgefunden hat.

10. Verfahren nach einem der vorhergehenden Ansprüche 1 bis 9, dadurch gekennzeichnet, daß es außerdem die folgenden Schritte aufweist:
    (p) Vergleichen der durch den Schritt (a) gemessenen Periode (Tm) mit der Periode ($T_{sec}$), die dem trockenen Fühler zugeordnet ist und
    (q) Ersetzen der dem trockenen Fühler zugeordneten Periode ($T_{sec}$) durch die gemessene Periode (Tm), wenn die Periode ($T_{sec}$) kleiner als die Periode ($T_{sec}$) ist.

11. Verfahren nach Anspruch 10, dadurch gekennzeichnet, daß zu Beginn des Verfahrens die dem Fühler zugeordnete Periode ($T_{sec}$) auf einen Anfangswert (Ti) initialisiert wird.

12. Verfahren nach Anspruch 10 oder 11, dadurch gekennzeichnet, daß es außerdem die folgenden Schritte aufweist:
    (r) Vergleichen der durch den Schritt (a) gemessenen Periode (Tm) mit der den trockenen Fühler zugeordneten und festgelegten Periode ($T_{sec}$) durch die Schritte (p) und (q), jedoch erhöht um einen vorgegebenen Wert (n),
    (s) Erstellen eines Unterbrechungssignals für die Heizung (CH) des Fühlers (CA), wenn die gemessene Periode (Tm) kleiner ist als die dem trockenen Fühler zugeordnete und um n Einheiten erhöhte Periode ($T_{sec}$).

13. Verfahren nach Anspruch 12, dadurch gekennzeichnet, daß das Einschalten des Heizsystems (CH) nur ermöglicht wird, wenn die gemessene Periode (Tm) um n Einheiten größer ist als die dem trockenen Fühler zugeordnete Periode ($T_{sec}$) und wenn dies während eines vorgegebenen Zeitintervalls erfolgt.

14. Verfahren nach Ansprüchen 12 und 13, dadurch gekennzeichnet, daß die Unterbrechung des Heizsystems (CH) nur ermöglicht wird, wenn die gemessene Periode (Tm) kleiner ist als die dem trockenen Fühler zugeordnete und um n Einheiten erhöhte Periode ($T_{sec}$).

15. Elektronische Vorrichtung zur Verarbeitung eines von einem Fühler (CA) stammenden elektrischen Signals (T), dessen Periode linear als Funktion der auf dem Fühler (CA) anwesenden Wassermenge variiert und Erstellen eines Entscheidungssignals (D) zum Einschalten als Funktion des Ergebnisses der Verarbeitung, dadurch gekennzeichnet, daß sie eine Anordnung ($P_0$, CTF, MP) aufweist, um die Dauer dieser Periode zu messen und um zwischen zwei aufeinanderfolgenden Messungen dieser Dauer ausschließlich eine Erhöhung der Dauer festzustellen (20, 22), um in diesem Fall anschließend die Erhöhung in einem ersten Addierer (24) zu speichern, indem zu ihr die vorhergehenden dem gleichen Wassertropfen zugeordneten Erhöhungen addiert werden.

16. Vorrichtung nach Anspruch 15, dadurch gekennzeichnet, daß die Erhöhung der Dauer (T) der Periode in einem Vergleicher (22) mit der Erhöhung der vorhergehenden Messung verglichen wird, derart, daß sie nur berücksichtigt wird, wenn sie größer als ein Bruchteil der vorher gemessenen Erhöhung ist.

17. Vorrichtung nach Ansprüchen 15 oder 16, dadurch gekennzeichnet, daß sie einen zweiten Vergleicher (28) aufweist, in dem der Inhalt des ersten Addierers (24) entsprechend einem Wassertropfen verglichen wird mit wenigstens einem vorgegebenen, einer bestimmten Größe entsprechenden Wert, wobei der Inhalt des ersten Addierers (24) anschließend in einem zweiten oder dritten Addierer (A00, A10, A20, A30 und A40) gespeichert wird, je nachdem, ob der Inhalt kleiner oder größer als der vorgegebene Wert ist, wobei die zweiten und dritten Addierer jeweils einer Tropfengröße zugeordnet sind.

18. Vorrichtung nach Anspruch 17, dadurch gekennzeichnet, daß sie eine Anordnung ($30_0$ bis $30_4$, $32_0$ bis $32_4$) aufweist, um in den zweiten und dritten Addierern während eines Zeitintervalls, das proportional zur Größe ist, die aufeinanderfolgenden Inhalte des ersten Addierers (24) zu addieren.

19. Vorrichtung nach Anspruch 18, dadurch gekennzeichnet, daß sie außerdem eine Anordnung (16) aufweist zur Berechnung pro Zeiteinheit des Mittelwertes der Inhalte der zweiten und dritten Addierer und zum Vergleichen dieses Mittelwertes mit wenigstens einer Schwelle, um wenigstens ein Steuersignal (D1, D2) für einen Scheibenwischer zu erstellen.

20. Vorrichtung nach Anspruch 15 oder 16, dadurch gekennzeichnet, daß sie außerdem einen vierten Addierer (38) und einen vierten Vergleicher (40) aufweist, um den Inhalt des vierten Vergleichers (38) mit einer Schwelle zu vergleichen und um ein zeitlich beschränktes Steuersignal (D3) für einen Scheibenwischer zu erstellen, wenn der Inhalt größer als ein vorgegebener Wert ist.

# FIG. 1

**POIDS FAIBLE**

*MP*

*D*

FENETRE DE MESURE

*Qi*

*CTF*

*CPTR*

*Qm*

*RS*

*RS*

**POIDS
FORT**

*FT*

*CPTR
INTERNE*

*CH*

*F*

*CA*

*T*

*Po*

# FIG. 2

*T* (MILLISECONDE)

*G1*

*G2*

3

2

1

0,5

*t*

$t_0$   $t_1$   $t_{11}$   $t_2$   $t_{21}$   (MILLISECONDE)

FIG. 3

# FIG. 4 a

$H2 \longrightarrow$ | MESURE $T_0$ | 50

$T_0 > T_1$ ? — 52

NON → / OUI ↓

$VL = 1$ ? — 54

OUI / NON

56 — | $VL = 0$ |

60 — | $\Sigma$ |

58 — | $VL = 1$ |

$\Sigma = S_4$ — 61

NON / OUI ↓

$Cp1 = 30sec$ — 62

NON / ↓

| BALAYAGE $D4$<br>$\Sigma = 0$<br>$Cp1 = 0$ | — 64

$\longleftarrow D1$
$\longleftarrow D3$
$\longleftarrow D2$

( FIG. 4 b )

(FIG. 4)

70 — MESURE $T_m$

72 — $T_m < T_{sec}$ ? — NON

OUI

76 — $Cap_{sec} = 1$ ? — NON

OUI

78 — $Cap_{sec} = 0$

80 — $T_{sec} = T_m$

74 — $Cap_{sec} = 0$

82 — $T_m > T_{sec} + n$

OUI — NON

90 — $Cp2 > 5 sec$

NON — NON

94 — $Cp2 > 5 sec$ ?

OUI

92 — DEBUT CHAUFFAGE

OUI

96 — ARRET CHAUFFAGE

98 — $Cp2 = 0$

100 — $Cp2 = Cp2 + 1$

FIG. 4 b